# FASCICULE DE BREVET EUROPEEN

(11) **EP 3 842 569 B1**
(45) Date de publication et mention de la délivrance du brevet: **29.07.2026**
(21) Numéro de dépôt: 20217450.4
(22) Date de dépôt: 28.12.2020
(51) Int. Cl.: C25B 1/042, C25B 9/00, C25B 9/05, C25B 15/08, H01M 8/04082, H01M 8/18, H01M 8/124

(54) **SYSTÈME D'ÉLECTROLYSE RÉVERSIBLE DE L'EAU, PROCÉDÉ DE STOCKAGE OU DE DÉSTOCKAGE D'ÉLECTRICITÉ PAR ÉLECTROLYSE RÉVERSIBLE DE L'EAU À HAUTE TEMPÉRATURE UTILISANT UN TEL SYSTÈME D'ÉLECTROLYSE, ET UTILISATION D'UN TEL SYSTÈME POUR STOCKER L'ÉNERGIE PRODUITE PAR UNE SOURCE D'ÉNERGIE RENOUVELABLE INTERMITTENTE**
REVERSIBLES WASSERELEKTROLYSESYSTEM, VERFAHREN ZUR SPEICHERUNG ODER FREISETZUNG VON ELEKTRIZITÄT DURCH REVERSIBLE HOCHTEMPERATUR-WASSERELEKTROLYSE MITTELS EINES SOLCHEN ELEKTROLYSESYSTEMS, UND VERWENDUNG EINES SOLCHEN SYSTEMS ZUR SPEICHERUNG VON ENERGIE, DIE VON EINER INTERMITTIERENDEN ERNEUERBAREN ENERGIEQUELLE ERZEUGT WIRD
REVERSIBLE WATER ELECTROLYSIS SYSTEM, METHOD FOR STORING OR RELEASING ELECTRICITY BY REVERSIBLE HIGH-TEMPERATURE WATER ELECTROLYSIS USING SUCH AN ELECTROLYSIS SYSTEM, AND USE OF SUCH A SYSTEM TO STORE ENERGY PRODUCED BY AN INTERMITTENT RENEWABLE ENERGY SOURCE

(30) Priorité: 26.12.2019 FR 1915609
(43) Date de publication de la demande: 30.06.2021
(73) Titulaire: Commissariat à l'Energie Atomique et aux Energies Alternatives, 75015 Paris (FR)
(72) Inventeur: ROGEZ, Franck, 78100 SAINT GERMAIN EN LAYE (FR); LACROIX, Vincent, 38054 Grenoble (FR); CREN, Julie, 38054 Grenoble (FR)
(74) Mandataire: Regimbeau

(56) Documents cités:
- EP-A1- 3 499 626
- WO-A2-2007/048997
- JP-A- H03 208 259

## Description

### DOMAINE DE L'INVENTION

La présente invention concerne le domaine de l'électrolyse à haute température (d'acronyme EHT, et d'acronyme anglais HTE pour *High Temperature Electrolysis*), en particulier l'électrolyse de la vapeur d'eau à haute température utilisant un électrolyseur à oxyde solide, (SOEC pour *Solide Oxide Electrolyser Cells* en anglais). Elle concerne également le domaine des piles à combustible à oxyde solide (SOFC pour *Solid Oxide Fuel Cells* en anglais). En particulier la présente invention concerne un système d'électrolyse réversible de l'eau, un procédé de stockage ou de déstockage d'électricité par électrolyse réversible de l'eau à haute température utilisant un tel système d'électrolyse, et une utilisation d'un tel système pour stocker l'énergie produite par une source d'énergie renouvelable intermittente afin que le rendement du système soit augmenté.

### ETAT DE LA TECHNIQUE

Il est connu d'électrolyser l'eau en utilisant un oxyde solide fonctionnant à haute température de type SOEC. Un tel électrolyseur comprend un empilement de motifs élémentaires, chaque motif élémentaire comprenant une cellule d'électrolyse à oxyde solide.

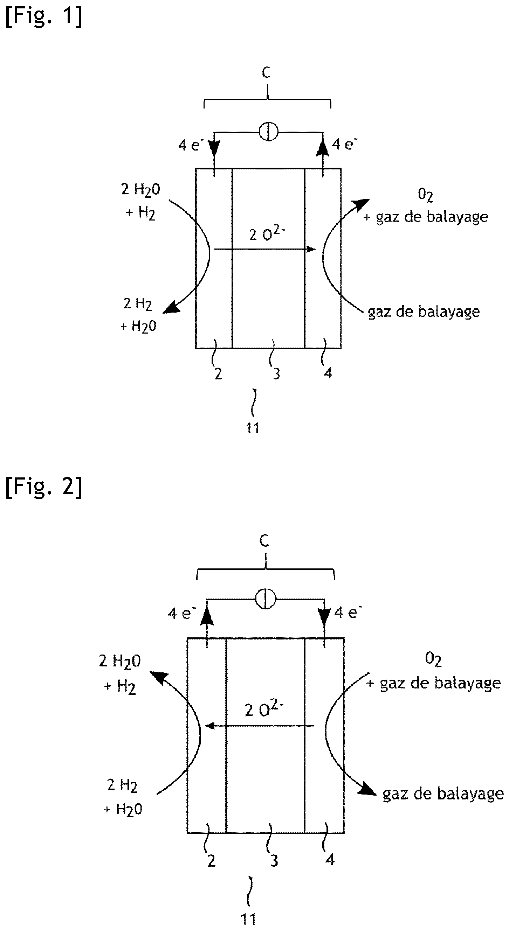

En référence à la figure 1 et à la figure 2, une cellule C d'électrolyse à oxyde solide comprend une anode 4, un électrolyte solide 3, et une cathode 2 superposés, et compris entre des plaques d'interconnexion en alliage métallique, aussi appelées plaques bipolaires ou interconnecteurs. Plus précisément, les interconnecteurs ont pour fonction d'assurer à la fois le passage du courant électrique et la circulation des gaz au voisinage de chaque cellule (tels que de la vapeur d'eau, du dihydrogène, du dioxygène), et de séparer les compartiments anodiques et cathodiques.

En référence à la figure 1, un dispositif formant électrolyseur réversible peut être configuré pour fonctionner selon un mode d'électrolyseur pour la production d'hydrogène. L'électrolyse de la vapeur d'eau à haute température peut être mise en œuvre en injectant de la vapeur d'eau dans la cathode 2. Sous l'effet d'un courant électrique appliqué à la cellule, les molécules d'eau sont dissociées à l'interface formée par la cathode 2 et l'électrolyte 3. Cette dissociation produit du dihydrogène (H₂) et des ions oxygène (O²⁻). Le dihydrogène est collecté et évacué en sortie de la cellule. Les ions oxygène O²⁻migrent au travers de l'électrolyte 3, et préférentiellement au travers de l'électrolyte 3 solide dans le cas d'un électrolyseur de type SOEC, et sont recombinés en dioxygène à l'interface entre l'électrolyte 3 et l'anode 4. Un gaz de balayage, préférentiellement de l'air, peut circuler au niveau de l'anode 4, et ainsi collecter l'oxygène généré sous forme gazeuse à l'anode 4. En référence à la figure 2, un dispositif formant électrolyseur réversible peut être configuré pour fonctionner selon un mode de pile à combustible pour la consommation d'hydrogène. L'oxydation de l'hydrogène à haute température peut être mise en œuvre en injectant du dihydrogène H₂ dans la cathode 2, et en injectant un gaz de balayage comprenant du dioxygène dans l'anode 4, typiquement de l'air. Les molécules de dioxygène sont dissociées à l'interface formée par l'anode 4 et l'électrolyte 3. Cette dissociation produit des ions oxygène (O²⁻). Les ions oxygène (O²⁻) migrent au travers de l'électrolyte 3, et préférentiellement au travers de l'électrolyte 3 solide dans le cas d'une pile à combustible de type SOFC, et sont recombinés en ions H₂0 à l'interface de la cathode 2.

Lors de l'utilisation d'un dispositif formant électrolyseur réversible à oxyde solide, par exemple de type SOEC et/ou SOFC, le gaz de balayage doit être chauffé à une température comprise entre 700 °C et 800 °C. De plus, le gaz de balayage doit être comprimé à une pression comprise entre 2 bars et 15 bars avant d'être introduit dans le dispositif formant électrolyseur réversible. L'augmentation de la pression du système, ainsi que les moyens d'élévation de température du gaz de balayage, nécessitent une consommation d'énergie supplémentaire, et entraînent ainsi une diminution du rendement global du système. Pourtant, ces conditions sont nécessaires au bon fonctionnement d'un électrolyseur réversible à oxyde solide.

JP H03 208259 A, montre, suivant le résumé, que le générateur de vapeur et la turbine à vapeur sont reliés à une pile à combustible à électrolyte solide (SOFC) par un surchauffeur de vapeur. Un réservoir d'oxygène, un compresseur d'air, et un dispositif de récupération de chaleur résiduelle sont également reliés à la SOFC. L'intégration de la SOFC au système de chauffage, en association avec le générateur de vapeur d'un réacteur nucléaire ou d'une chaudière, permet de constituer un système complexe. La vapeur excédentaire produite par le générateur est surchauffée à une température élevée (900 à 1000 °C) par le surchauffeur, puis acheminée vers la SOFC pour y stocker de l'énergie. Cette énergie est ensuite électrolysée en hydrogène et en oxygène, stockés respectivement dans un alliage de stockage d'hydrogène et un réservoir d'oxygène. Lors des pics de consommation, l'hydrogène et l'oxygène sont utilisés comme combustible pour alimenter la SOFC. Dans ce cas, le générateur de vapeur entraîne la turbine à vapeur en rotation continue pour produire l'électricité nécessaire. De cette manière, les parties excédentaires de l'énergie et de la vapeur sont éliminées et utilisées efficacement, et l'énergie est générée pour répondre à une réduction de pointe.

### EXPOSE DE L'INVENTION

Un but de l'invention est de proposer une solution pour augmenter le rendement global du système comprenant un dispositif formant électrolyseur réversible à oxyde solide. Plus particulièrement, un but de l'invention est d'éviter la perte d'énergie entraînée par le chauffage du gaz de balayage et/ou par la compression du gaz de balayage.

Ce but est atteint dans le cadre de la présente invention grâce à un système d'électrolyse réversible de l'eau tel que défini dans la revendication 1 comprenant :
- au moins un dispositif formant électrolyseur réversible configuré pour fonctionner selon un mode d'électrolyseur pour la production d'hydrogène ou selon un mode de pile à combustible pour la consommation d'hydrogène, le dispositif comprenant au moins une entrée de gaz de balayage et une sortie de gaz de balayage,
- un réservoir d'hydrogène configuré pour stocker l'hydrogène en provenance du dispositif en mode d'électrolyseur, et pour fournir de l'hydrogène au dispositif en mode de pile à combustible,
- un réservoir d'oxygène configuré pour stocker l'oxygène en provenance du dispositif en mode d'électrolyseur pour la production d'hydrogène, et pour fournir de l'oxygène au dispositif en mode de pile à combustible pour la consommation d'hydrogène,
- un premier circuit fluidique reliant l'entrée de gaz de balayage et la sortie de gaz de balayage de sorte à ce qu'un gaz de balayage puisse circuler en boucle entre le dispositif et le premier circuit fluidique,
- un deuxième circuit fluidique reliant le réservoir d'oxygène au premier circuit fluidique.

Le système peut avantageusement comprendre les caractéristiques suivantes, prises individuellement ou en l'une quelconque de leurs combinaisons techniquement possibles :
- le dispositif est configuré pour fonctionner selon un mode d'électrolyseur à oxyde solide du type SOEC pour la production d'hydrogène, ou selon un mode de pile à combustible à oxyde solide du type SOFC pour la consommation d'hydrogène, le dispositif étant configuré pour fonctionner à une pression comprise entre 2 bars et 15 bars,
- le premier circuit fluidique et/ou le deuxième circuit fluidique comprennent au moins une conduite propre au transport d'oxygène en phase gazeuse, la conduite présentant une paroi interne, et comprenant une couche de matériau anti-oxydant recouvrant la paroi interne,
- l'oxygène est stocké dans le réservoir d'oxygène à une pression comprise entre 20 bars et 250 bars,
- l'oxygène est stocké dans le réservoir d'oxygène à une température comprise entre 10° C et 100 °C,
- le réservoir d'oxygène est une cavité saline,
- le réservoir d'hydrogène et/ou le réservoir d'oxygène comprennent au moins un turbo-détendeur configuré pour produire de l'électricité lors de la détente de l'hydrogène et/ou de l'oxygène en sortie dudit réservoir d'oxygène et/ou d'hydrogène,

Un autre aspect de l'invention est un procédé de stockage ou de déstockage d'électricité par électrolyse réversible de l'eau à haute température tel que défini dans la revendication 7, le procédé mettant en œuvre un système conforme à l'invention, et comprenant au moins une étape dans laquelle :
a) lorsque l'électrolyseur réversible fonctionne selon un mode d'électrolyseur pour la production d'hydrogène, on injecte l'oxygène produit par électrolyse dans le réservoir d'oxygène, et/ou
b) lorsque l'électrolyseur réversible fonctionne selon un mode de pile à combustible pour la consommation d'hydrogène, on injecte dans ledit dispositif un mélange d'oxygène stocké dans le réservoir d'oxygène et d'air, l'oxygène stocké présentant une pression supérieure à 2 bars,

Le procédé met avantageusement en œuvre un système dans lequel le dispositif comprend au moins une entrée de gaz de balayage, une sortie de gaz de balayage, le système comprenant également un premier circuit fluidique reliant l'entrée de gaz de balayage et la sortie de gaz de balayage de sorte à ce qu'un gaz de balayage puisse circuler en boucle entre le dispositif et le premier circuit fluidique, le système comprenant également un deuxième circuit fluidique reliant le réservoir d'oxygène au premier circuit fluidique, l'étape b) étant mise en œuvre en mettant en circulation en boucle le gaz de balayage entre le premier circuit fluidique et le dispositif, et préférentiellement en injectant de l'oxygène en provenance du réservoir d'oxygène dans le premier circuit fluidique.

Avantageusement, lorsque le dispositif d'électrolyse réversible fonctionne selon un mode de pile à combustible pour la consommation d'hydrogène, le mélange d'air et d'oxygène stocké est injecté dans le dispositif 11 à une température comprise entre 700°C et 900 °C.

Un autre aspect de l'invention est une utilisation d'un système conforme à l'invention pour stocker l'énergie produite par une source d'énergie renouvelable intermittente, préférentiellement choisie parmi une centrale électrique photovoltaïque et une centrale électrique éolienne, voir la revendication 10.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] - la figure 1 illustre schématiquement le fonctionnement d'un dispositif formant électrolyseur réversible fonctionnant en mode d'électrolyseur pour la production d'hydrogène,
[Fig. 2] - la figure 2 illustre schématiquement le fonctionnement d'un dispositif formant électrolyseur réversible fonctionnant en mode de pile à combustible pour la consommation d'hydrogène,
[Fig. 3] - la figure 3 illustre schématiquement un système d'électrolyse réversible de l'eau, comprenant un dispositif formant électrolyseur réversible, un réservoir d'oxygène, ainsi qu'un réseau de canaux fluidiques reliant le réservoir d'oxygène au dispositif,
[Fig. 4] - la figure 4 illustre schématiquement un système d'électrolyse réversible de l'eau, comprenant un dispositif formant électrolyseur réversible, un réservoir d'oxygène, ainsi qu'un réservoir d'hydrogène.

Sur l'ensemble des figures, les éléments similaires portent des références identiques.

### DEFINITIONS

On entend par « turbo-détendeur » ou par « turbine d'expansion » une turbine, par exemple centrifuge, ou par exemple à écoulement axial, par laquelle un gaz est détendu pour produire un travail qui est utilisé pour entraîner un compresseur et/ou générateur d'électricité. En particulier, le turbo-détendeur peut, lors de la détente du gaz pressurisé, entraîner un alternateur pour transformer le travail en énergie électrique.

On entend par gaz pressurisé un gaz présentant une pression supérieure à 2 bars, et préférentiellement comprise entre deux bars et cinq bars.

On entend par « dispositif formant électrolyse réversible à haute température » un dispositif adapté pour l'électrolyse réversible de l'eau à une température comprise entre 700 °C et 900 °C, préférentiellement à 800°C.

On entend par « énergie renouvelable » une énergie produite par une centrale à énergie solaire thermique, solaire photovoltaïque, éolienne, par énergie des vagues, marémotrice, hydrolienne, thermique des mers et/ou osmotique.

### DESCRIPTION DETAILLEE DE L'INVENTION

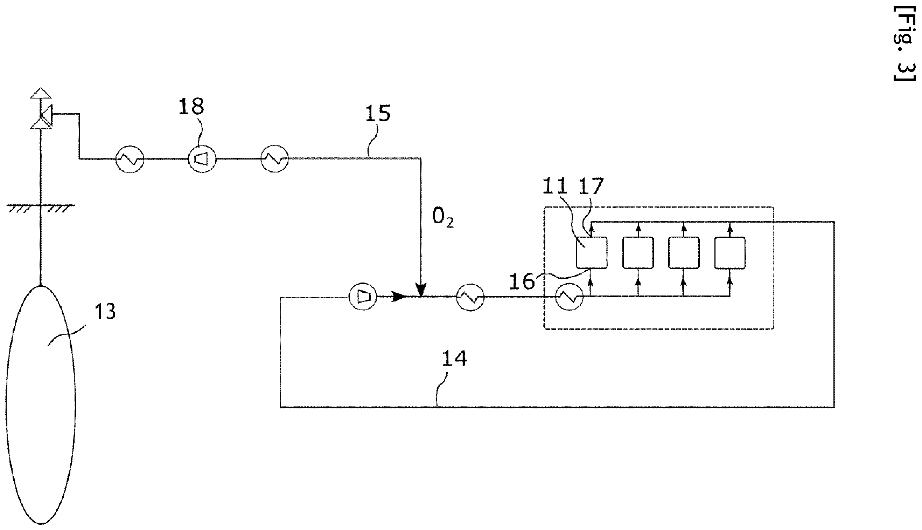

En référence à la figure 3, un système 1 d'électrolyse réversible de l'eau comprend au moins un dispositif 11 formant électrolyse réversible configuré pour fonctionner selon un mode d'électrolyseur pour la production d'hydrogène ou selon un mode de pile à combustible pour la consommation d'hydrogène. Le système 1 comprend préférentiellement un empilement de dispositifs 11, chaque dispositif 11 étant relié électriquement en série, et étant alimenté ou évacué en gaz en parallèle. Préférentiellement, le dispositif 11 est un dispositif 11 formant électrolyseur réversible à oxyde solide, c'est-à-dire que l'électrolyte 3 est un oxyde solide. Le dispositif 11 est alors configuré pour fonctionner selon un mode d'électrolyseur à oxyde solide du type SOEC pour la production d'hydrogène, ou selon un mode de pile à combustible à oxyde solide du type SOFC pour la consommation d'hydrogène. Le dispositif 11 comprend au moins deux entrées ou sorties configurées pour permettre la circulation de dihydrogène gazeux ou de vapeur d'eau. Le dispositif 11 comprend également au moins deux entrées ou sorties configurées pour permettre la circulation d'un gaz de balayage et de dioxygène gazeux, préférentiellement de l'air. Pour éviter les contraintes thermiques sur la pile, le gaz de balayage et/ou le dioxygène gazeux arrivant ou émanant du dispositif 11 doivent être chauffés à une température comprise entre 700°C et 800°C.

Le système 1 comprend un réservoir d'hydrogène 12 configuré pour stocker l'hydrogène en provenance du dispositif 11 en mode d'électrolyseur pour la production d'hydrogène, et pour fournir de l'hydrogène au dispositif 11 en mode de piles à combustible pour la consommation d'hydrogène.

Le système 1 comprend également un réservoir d'oxygène 13 configuré pour stocker l'oxygène en provenance du dispositif 11 en mode d'électrolyseur pour la production d'hydrogène, et pour fournir de l'oxygène au dispositif 11 en mode de piles à combustible pour la consommation d'hydrogène. Le réservoir d'oxygène 13 comprend préférentiellement de l'oxygène en phase gazeuse. La température de l'oxygène stockée est préférentiellement comprise entre 10°C et 100 °C. La pression de l'oxygène stocké est préférentiellement comprise entre 20 bars et 250 bars. Les conditions de stockage en température et en pression de l'oxygène sont directement dépendantes de la géométrie du réservoir d'oxygène 13, notamment de sa profondeur.

L'oxygène en provenance du réservoir d'oxygène 13 peut être mélangé aux gaz de balayage lors du fonctionnement en mode de pile à combustible du dispositif 11. Comme l'oxygène est stocké à une pression comprise entre 20 bars et 250 bars, lorsque l'oxygène en provenance du réservoir d'oxygène 13 est mélangé au gaz de balayage, les gaz mélangés nécessitent une compression moindre que dans l'art antérieur lors de l'alimentation du dispositif 11 en mode de pile à combustible. Il en résulte une économie d'énergie consommée par le système 1, et ainsi une augmentation du rendement du système 1.

Dans le réservoir d'oxygène 13, le gaz stocké peut être un mélange de gaz comprenant de l'oxygène et un ou plusieurs autres gaz. La fraction volumique en oxygène est préférentiellement supérieure à 30 %, notamment supérieure à 70 %, et plus préférentiellement supérieure à 95 %. L'autre gaz peut être par exemple de l'azote. Un autre aspect de l'invention est un procédé comprenant au moins une étape dans laquelle on injecte l'oxygène produit par électrolyse dans le réservoir d'oxygène 13 lorsque l'électrolyseur réversible fonctionne selon un mode d'électrolyseur pour la production d'hydrogène, et/ou on injecte dans le dispositif 11 un mélange de gaz de balayage, préférentiellement d'air, et d'oxygène stocké dans le réservoir d'oxygène 13 lorsque l'électrolyseur réversible fonctionne selon un mode de pile à combustible pour la consommation d'hydrogène. Préférentiellement, le procédé comprend une étape dans laquelle le ou les gaz contenus par le premier circuit fluidique 14, par exemple le gaz de balayage et l'oxygène, sont mis en circulation en boucle entre le premier circuit fluidique 14 et le dispositif 11.

Selon un aspect de l'invention, on injecte préférentiellement dans le dispositif 11 un mélange de gaz comprenant au moins 90 % et préférentiellement 95 % d'oxygène lorsque l'électrolyseur réversible fonctionne selon un mode de pile à combustible pour la consommation d'hydrogène, avant un fonctionnement du dispositif 11 avec un gaz de balayage. Ainsi, il est possible d'augmenter l'efficacité énergétique du système 1.

Le système 1 comprend conformément à l'invention un premier circuit fluidique 14,
reliant l'entrée 16 de gaz de balayage à la sortie 17 de gaz de balayage d'un dispositif 11, de sorte à ce qu'un gaz de balayage puisse circuler en boucle entre le dispositif 11 et le premier circuit fluidique 14. Le système 1 comprend également un deuxième circuit fluidique 15 reliant le réservoir d'oxygène 13 au premier circuit fluidique 14. Ainsi, de l'oxygène peut être introduit dans une boucle de circulation de gaz de balayage entre le dispositif 11 et le premier circuit fluidique 14. Une dépense d'énergie pour recompresser de l'air extérieur peut ainsi être évitée, et le rendement du système 1 peut-être ainsi augmenté au regard du rendement des systèmes de l'art antérieur. Par exemple, la différence de pression entre l'oxygène stocké et le gaz compris dans le premier circuit fluidique 14 peut être égale à 1 bar, tandis que cette différence de pression peut être égale à 10 bars lors de l'utilisation d'air extérieur.

Le premier circuit fluidique 14 et/ou le deuxième circuit fluidique 15 comprennent préférentiellement au moins une conduite comprenant une paroi interne et une couche de matériau propre à empêcher et/ou à limiter l'oxydation des conduites recouvrant la paroi interne. Le matériau peut être préférentiellement un polymère ou un mélange de polymères, ou un matériau plastique. Ainsi, l'oxydation des conduites du réseau de transport de l'oxygène entre le réservoir d'oxygène 13 et le dispositif 11 peut être protégé de l'oxydation.

L'utilisation de l'oxygène stocké dans le réservoir d'oxygène 13 permet également d'utiliser, lors du fonctionnement du dispositif 11, un volume d'air moindre que dans les systèmes de l'art antérieur. Ainsi, la quantité d'air à chauffer est également moindre, ce qui permet de réaliser des économies d'énergie.

Le premier circuit fluidique 14 peut comprendre un moyen d'entraînement d'un écoulement gazeux, par exemple un compresseur. Le premier circuit fluidique 14 peut également comprendre un ou plusieurs échangeurs thermiques. De tels échangeurs thermiques peuvent par exemple permettre de transférer la chaleur d'un gaz sortant du dispositif 11 vers un gaz entrant dans le dispositif 11. Lors de l'utilisation du dispositif 11 en mode de pile à combustible, la chaleur du gaz de balayage sortant du dispositif 11 peut par exemple être utilisée pour chauffer le dihydrogène gazeux entrant dans le dispositif 11. Ainsi, le rendement du système 1 peut être augmenté par rapport aux systèmes de l'art antérieur.

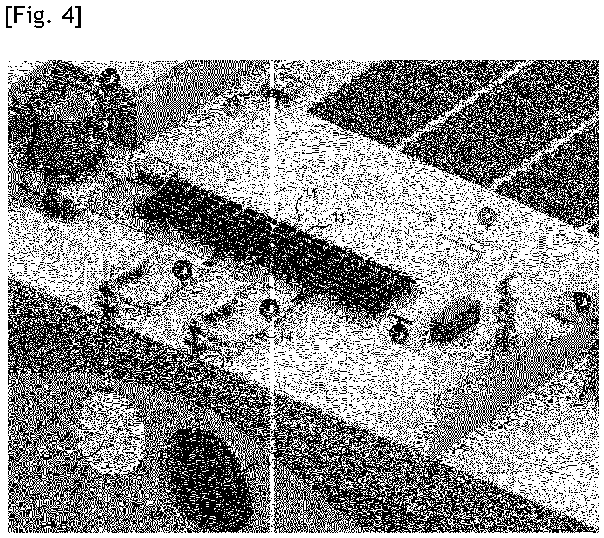

En référence à la figure 4, le réservoir d'oxygène 13 peut préférentiellement comprendre une cavité saline 19. Préférentiellement, le réservoir d'hydrogène 12 comprend également une cavité saline 19. Par « cavité saline », on entend une cavité réalisée en sous-sol et formée par des parois solides en sel. Préférentiellement, le sel comprend de l'halite, plus couramment appelée sel gemme dans le langage minier. Une cavité saline 19 est par exemple fabriquée en injectant de l'eau dans une couche souterraine de sel. L'eau injectée dissout progressivement une partie du sel, et forme de la saumure. La saumure est extraite, laissant place à la cavité saline 19. Ainsi, l'oxygène stocké est mis en sécurité des potentiels agressions extérieures, et des risques présents en surface. L'oxygène stocké dans la cavité saline 19 présente préférentiellement une pression comprise entre 20 bars et 250 bars. La température de l'oxygène de la cavité saline 19 est préférentiellement comprise entre 10°C et 100°C. Le volume de la cavité saline 19 est préférentiellement compris entre 1 000 m³ et 1 000 000 m³.

Préférentiellement, au moins un réservoir choisi parmi le réservoir d'hydrogène 12 et le réservoir d'oxygène 13, comprend au moins un turbo-détendeur 18. Le turbo-détendeur 18 est configuré pour produire de l'électricité lors de la détente de l'hydrogène en sortie du réservoir d'hydrogène 12 et/ou lors de la détente de l'oxygène en sortie du réservoir d'oxygène 13.

Le système 1 comprend un réseau fluidique de distribution de l'hydrogène, reliant le dispositif 11 et le réservoir d'hydrogène. Le système 1 comprend également un réseau fluidique de distribution de l'oxygène, reliant le dispositif 11 et le réservoir d'oxygène 13, le réseau fluidique de distribution de l'oxygène comprenant le premier circuit fluidique 15 et le deuxième circuit fluidique 14. Chaque réservoir peut comprendre un conduit reliant la réserve d'oxygène et/ou d'hydrogène et le turbodétendeur. Le système 1 comprend préférentiellement un échangeur thermique entre une partie du réseau de distribution d'oxygène et/ou d'hydrogène et entre le conduit. Ainsi, il est possible de chauffer l'hydrogène et/ou l'oxygène avant son entrée dans le turbodétendeur, de sorte à augmenter la production d'énergie du turbodétendeur.

Le turbo-détendeur 18 peut aussi être couplé à des moyens mécaniques permettant la recompression ou le pompage de certains fluides du système 1. Ainsi, le rendement électrique du système 1 peut être augmenté au vu des rendements des systèmes de l'art antérieur. Le turbo-détendeur 18 peut être agencé en série dans le deuxième circuit fluidique 15.

En référence à la figure 2, le système 1 peut être utilisé pour stocker l'énergie produite par une source d'énergie renouvelable intermittente, préférentiellement une centrale électrique photovoltaïque et/ou une centrale électrique éolienne. Ainsi, la quantité d'énergie produite par une source d'énergie renouvelable peut être lissée dans le temps par le système 1. Un autre aspect de l'invention est l'utilisation du système 1 pour approvisionner le réseau de transport électrique en énergie.

## Revendications

1. Système (1) d'électrolyse réversible de l'eau, comprenant :
- au moins un dispositif (11) formant électrolyseur réversible configuré pour fonctionner selon un mode d'électrolyseur pour la production d'hydrogène ou selon un mode de pile à combustible pour la consommation d'hydrogène, le dispositif (11) comprenant au moins une entrée (16) de gaz de balayage et une sortie (17) de gaz de balayage,
- un premier circuit fluidique (14) reliant l'entrée (16) de gaz de balayage et la sortie (17) de gaz de balayage de sorte à ce qu'un gaz de balayage puisse circuler en boucle entre le dispositif (11) et le premier circuit fluidique (14),
- un réservoir d'hydrogène (12) configuré pour stocker l'hydrogène en provenance du dispositif (11) en mode d'électrolyseur, et pour fournir de l'hydrogène au dispositif (11) en mode de pile à combustible,
- un réservoir d'oxygène (13) configuré pour stocker l'oxygène en provenance du dispositif (11) en mode d'électrolyseur pour la production d'hydrogène, et pour fournir de l'oxygène au dispositif (11) en mode de pile à combustible pour la consommation d'hydrogène, et
- un deuxième circuit fluidique (15) reliant le réservoir d'oxygène (13) au premier circuit fluidique (14).

2. Système (1) selon la revendication précédente, dans lequel le dispositif (11) est configuré pour fonctionner selon un mode d'électrolyseur à oxyde solide du type SOEC pour la production d'hydrogène, ou selon un mode de pile à combustible à oxyde solide du type SOFC pour la consommation d'hydrogène, le dispositif (11) étant configuré pour fonctionner à une pression comprise entre 2 bars et 15 bars.

3. Système (1) selon l'une des revendications précédentes, dans lequel le premier circuit fluidique (14) et/ou le deuxième circuit fluidique (15) comprennent au moins une conduite propre au transport d'oxygène en phase gazeuse, la conduite présentant une paroi interne, et comprenant une couche de matériau anti-oxydant recouvrant la paroi interne.

4. Système (1) selon l'une des revendications précédentes, dans lequel l'oxygène est stocké dans le réservoir d'oxygène (13) à une pression comprise entre 20 bars et 250 bars.

5. Système (1) selon l'une des revendications précédentes, dans lequel le réservoir d'oxygène (13) est une cavité saline (19).

6. Système (1) selon l'une des revendications précédentes, dans lequel le réservoir d'hydrogène (12) et/ou le réservoir d'oxygène (13) comprennent au moins un turbo-détendeur (18) configuré pour produire de l'électricité lors de la détente de l'hydrogène et/ou de l'oxygène en sortie dudit réservoir d'oxygène et/ou d'hydrogène.

7. Procédé de stockage ou de déstockage d'électricité par électrolyse réversible de l'eau à haute température, **caractérisé en ce qu'**il met en œuvre un système conforme à l'une des revendications 1 à 6, et **en ce qu'**il comprend au moins une étape dans laquelle :
a) lorsque l'électrolyseur réversible fonctionne selon un mode d'électrolyseur pour la production d'hydrogène, on injecte l'oxygène produit par électrolyse dans le réservoir d'oxygène (13), et/ou
b) lorsque l'électrolyseur réversible fonctionne selon un mode de pile à combustible pour la consommation d'hydrogène, on injecte dans ledit dispositif (11) un mélange d'oxygène stocké dans le réservoir d'oxygène (13) et d'air, l'oxygène stocké présentant une pression supérieure à 2 bars.

8. Procédé selon la revendication précédente, dans lequel l'étape b) est mise en œuvre en mettant en circulation en boucle le gaz de balayage entre le premier circuit fluidique (14) et le dispositif (11), et en injectant de l'oxygène en provenance du réservoir d'oxygène (13) dans le premier circuit fluidique (14).

9. Procédé selon la revendication 7 ou 8, dans lequel, lorsque le dispositif (11) d'électrolyse réversible fonctionne selon un mode de pile à combustible pour la consommation d'hydrogène, le mélange d'air et d'oxygène stocké est injecté dans le dispositif 11 à une température comprise entre 700°C et 900 °C.

10. Utilisation d'un système selon l'une des revendications 1 à 6, pour stocker l'énergie produite par une source d'énergie renouvelable intermittente, préférentiellement choisie parmi une centrale électrique photovoltaïque et une centrale électrique éolienne.

## Patentansprüche

1. System (1) zur reversiblen Wasserelektrolyse , umfassend:
- mindestens eine Vorrichtung (11), die einen reversiblen Elektrolyseur bildet und so konfiguriert ist, dass sie im Elektrolyseur-Modus zur Erzeugung von Wasserstoff oder im Brennstoffzellen-Modus zum Verbrauch von Wasserstoff arbeitet, wobei die Vorrichtung (11) mindestens einen Spülgaseinlass (16) und einen Spülgasauslass (17) umfasst ,
- einen ersten Fluidkreislauf (14), der den Spülgaseinlass (16) und den Spülgasauslass (17) verbindet, so dass ein Spülgas in einem Kreis zwischen der Vorrichtung (11) und dem ersten Fluidkreislauf (14) zirkulieren kann,
- einen Wasserstoffspeicher (12), der so konfiguriert ist, dass er im Elektrolyseur-Modus den aus der Vorrichtung (11) stammenden Wasserstoff speichert und im Brennstoffzellen-Modus der Vorrichtung (11) Wasserstoff zuführt,
- einen Sauerstoffspeicher (13), der konfiguriert ist, dass er im Elektrolyseur-Modus Sauerstoff aus der Vorrichtung (11) zur Erzeugung von Wasserstoff speichert und im Brennstoffzellen-Modus der Vorrichtung (11) Sauerstoff für den Verbrauch des Wasserstoffs zuführt, und
- einen zweiten Fluidkreislauf (15), der den Sauerstoffspeicher (13) mit dem ersten Fluidkreislauf (14) verbindet.

2. System (1) nach vorstehendem Anspruch, wobei die Vorrichtung (11) so konfiguriert ist, dass sie gemäß einem SOEC-Festoxid-Elektrolyseur-Modus zur Erzeugung von Wasserstoff oder gemäß einem SOFC-Festoxid-Brennstoffzellen-Modus zum Verbrauch von Wasserstoff arbeitet, wobei die Vorrichtung (11) so konfiguriert ist, dass sie bei einem Druck zwischen 2 bar und 15 bar arbeitet.

3. System (1) nach einem der vorstehenden Ansprüche, wobei der erste Fluidkreislauf (14) und/oder der zweite Fluidkreislauf (15) mindestens eine Leitung umfassen, die für den Transport von Sauerstoff in der Gasphase geeignet ist, wobei die Leitung eine Innenwand aufweist und eine die Innenwand bedeckende Schicht aus einem oxidationshemmenden Material umfasst.

4. System (1) nach einem der vorstehenden Ansprüche, wobei der Sauerstoff in dem Sauerstoffbehälter (13) bei einem Druck zwischen 20 bar und 250 bar gespeichert ist.

5. System (1) nach einem der vorstehenden Ansprüche, wobei der Sauerstoffspeicher (13) ein Salzkavität (19) ist.

6. System (1) nach einem der vorstehenden Ansprüche, wobei der Wasserstoffspeicher (12) und/oder der Sauerstoffspeicher (13) mindestens einen Turbodruckminderer (18) aufweisen, der so konfiguriert ist, dass er bei der Entspannung des Wasserstoffs und/oder des Sauerstoffs am Ausgang des Sauerstoff- und/oder Wasserstoffspeichers Strom erzeugt.

7. Verfahren zur Speicherung oder Entnahme von Strom durch reversible Hochtemperatur-Wasserelektrolyse, **dadurch gekennzeichnet, dass** es ein System nach einem der Ansprüche 1 bis 6 verwendet und dass es mindestens einen Schritt umfasst, bei dem:
a) wenn der reversible Elektrolyseur im Elektrolyseur-Modus zur Erzeugung von Wasserstoff arbeitet, der durch Elektrolyse erzeugte Sauerstoff in den Sauerstoffspeicher (13) eingespeist wird, und/oder
b) wenn der reversible Elektrolyseur im Brennstoffzellen-Modus zum Verbrauch von Wasserstoff arbeitet, in die Vorrichtung (11) ein Gemisch aus in dem Sauerstoffspeicher (13) gespeichertem Sauerstoff und Luft eingespeist wird, wobei der gespeicherte Sauerstoff einen Druck von mehr als 2 bar aufweist.

8. Verfahren nach vorstehendem Anspruch, wobei der Schritt b) durchgeführt wird, indem das Spülgas in einem Kreis zwischen dem ersten Fluidkreislauf (14) und der Vorrichtung (11) in Zirkulation versetzt wird und indem der Sauerstoff aus dem Sauerstoffspeicher (13) in den ersten Fluidkreislauf (14) eingespeist wird.

9. Verfahren nach Anspruch 7 oder 8, wobei, wenn die reversible Elektrolysevorrichtung (11) im Brennstoffzellen-Modus zum Verbrauch von Wasserstoff arbeitet, das gespeicherte Luft-Sauerstoff-Gemisch bei einer Temperatur zwischen 700°C und 900°C in die Vorrichtung (11) eingespeist wird.

10. Verwendung eines Systems nach einem der Ansprüche 1 bis 6 zur Speicherung von Energie, die von einer intermittierenden erneuerbaren Energiequelle erzeugt wird, vorzugsweise ausgewählt aus einem Photovoltaikkraftwerk und einem Windkraftwerk.

## Claims

1. A system (1) for the reversible electrolysis of water, comprising:
- at least one reversible electrolyser device (11) configured to operate in an electrolyser mode for the production of hydrogen or in a fuel cell mode for the consumption of hydrogen, the device (11) comprising at least one sweep gas inlet (16) and a sweep gas outlet (17),
- a first fluid circuit (14) connecting the sweep gas inlet (16) and the sweep gas outlet (17) so that a sweep gas can circulate in a loop between the device (11) and the first fluid circuit (14),
- a hydrogen tank (12) configured to store hydrogen from the device (11) in the electrolyser mode, and to supply hydrogen to the device (11) in the fuel cell mode,
- an oxygen tank (13) configured to store oxygen from the device (11) in the electrolyser mode for hydrogen production, and to supply oxygen to the device (11) in the fuel cell mode for hydrogen consumption, and
- a second fluid circuit (15) connecting the oxygen reservoir (13) to the first fluid circuit (14) .

2. System (1) according to the preceding claim, wherein the device (11) is configured to operate in a solid oxide electrolyser (SOEC) mode for hydrogen production, or in a solid oxide fuel cell (SOFC) mode for hydrogen consumption, the device (11) being configured to operate at a pressure of between 2 bar and 15 bar.

3. System (1) according to one of the preceding claims, wherein the first fluid circuit (14) and/or the second fluid circuit (15) comprise at least one conduit suitable for transporting oxygen in the gaseous phase, the conduit having an inner wall, and comprising a layer of anti-oxidant material covering the inner wall.

4. System (1) according to one of the preceding claims, wherein the oxygen is stored in the oxygen reservoir (13) at a pressure of between 20 bar and 250 bar.

5. A system (1) according to one of the preceding claims, wherein the oxygen tank (13) is a saline cavity (19).

6. System (1) according to one of the preceding claims, wherein the hydrogen tank (12) and/or the oxygen tank (13) comprise at least one turbo-expander (18) configured to generate electricity during the expansion of the hydrogen and/or oxygen at the outlet of said oxygen and/or hydrogen tank.

7. A method for storing or releasing electricity by high-temperature reversible electrolysis of water, **characterised in that** it implements a system in accordance with one of claims 1 to 6, and **in that** it comprises at least one step in which:
a) when the reversible electrolyser is operating in an electrolyser mode for the production of hydrogen, the oxygen produced by electrolysis is injected into the oxygen tank (13), and/or
b) when the reversible electrolyser is operating in a fuel cell mode for the consumption of hydrogen, a mixture of oxygen stored in the oxygen tank (13) and air is injected into said device (11), the stored oxygen having a pressure greater than 2 bar.

8. A method according to the preceding claim, wherein step b) is carried out by circulating the sweep gas in a loop between the first fluid circuit (14) and the device (11), and by injecting oxygen from the oxygen tank (13) into the first fluid circuit (14).

9. A method according to claim 7 or 8, wherein, when the reversible electrolysis device (11) operates in a fuel cell mode for hydrogen consumption, the mixture of air and stored oxygen is injected into the device (11) at a temperature of between 700°C and 900°C.

10. Use of a system according to any one of claims 1 to 6, for storing energy produced by an intermittent renewable energy source, preferably selected from a photovoltaic power plant and a wind power plant.
